# EUROPEAN PATENT SPECIFICATION

(11) **EP 3 852 574 B1**
(45) Date of publication and mention of the grant of the patent: **07.06.2023**
(21) Application number: 19773146.6
(22) Date of filing: 13.09.2019
(51) Int. Cl.: A45F 3/20

(54) **COLLAPSIBLE VESSEL**
ZUSAMMENKLAPPBARE GEFÄSSE
RÉCIPIENT PLIABLE

(30) Priority: 21.09.2018 GB 201815385
(43) Date of publication of application: 28.07.2021
(73) Proprietor: JOI Ltd, Hampton Court Road East Molesey Surrey KT8 9BN (GB)
(72) Inventor: ADAMS, Nick, Surrey KT8 9BN (GB); MURPHY, Tracy, Surrey KT8 9BN (GB)
(74) Representative: Hutter, Anton
(86) International application number: PCT/GB2019/052559
(87) International publication number: WO 2020/058673

(56) References cited:
- US-A1- 2010 308 042
- US-A1- 2011 284 547
- US-A1- 2014 332 528

## Description

The present invention relates to collapsible vessels, and in particular to collapsible vessels or containers for retaining fluids. The invention is especially concerned with collapsible cups or mugs for containing liquids, such as drinks and beverages (including soup or broth).

Collapsible containers or vessels are known and are used as a means of retaining liquids, in particular beverages. Such vessels enable convenient storage and travel due to their ability to collapse into a small size to fit into small spaces. While such vessels have been used for a number of years, they suffer from many issues, which limits their effectiveness and use. For example, known collapsible vessels have a tendency to leak by nature of their collapsible design. Furthermore, many vessels are unable to maintain an extended configuration in the event of a small amount of pressure being exerted on the top of the vessel, thereby leading to the vessels collapsing and spilling or at least leaking the liquid that is contained within. Also, the use of collapsible vessels for retaining hot beverages is limited, as it has proven to be challenging to develop a vessel that is both collapsible and insulating such that a user can safely hold the vessel without risk of suffering burns. Indeed, to date, it has not been possible to make a leak-proof collapsible cup out of materials having different thermal expansion properties.

There is therefore a need to provide improved collapsible vessels for retaining fluids. The present invention arises from the inventor's work in trying to overcome the problems associated with the prior art. The documents US 2010/308042 A1 and US 2014/332528 A1 disclose collapsible vessels according to the state of the art.

According to a first aspect of the invention, there is provided a collapsible vessel for containing fluid according to claim 1. Preferential embodiments are recited in the dependent claims.

For a better understanding of the invention, and to show how embodiments of the same may be carried into effect, reference will now be made, by way of example, to the accompanying Figures, in which:
**Figure 1** is a perspective view of an embodiment of a collapsible vessel for carrying fluid having three sections shown in an extended configuration;
**Figure 2** is a perspective view of the embodiment of the vessel shown in a collapsed (or "transportation") configuration with all three sections nested together;
**Figure 3** is a cross-sectional side view of the vessel shown in the extended (or "fluid containing") configuration with all three sections extended from one another;
**Figure 4a** is a partial cross-sectional perspective view of the vessel as viewed internally and showing components of a locking system, and **Figure 4b** is an enlarged internal view of a "male" component of the locking system shown in Figure 4a;
**Figure 5a** is a partial cross-sectional perspective view of the vessel as viewed externally and showing components of the locking system, and **Figure 5b** is an enlarged external view of a "female" component of the locking system shown in Figure 5a;
**Figure 6** is an alternative perspective view of the vessel shown in the extended configuration with the three sections separated and with a drinking aperture open;
**Figure 7** is an alternative perspective view of the vessel shown in the collapsed configuration with a drinking aperture closed;
**Figure 8** is an alternative perspective view of the vessel shown in the collapsed configuration with the drinking aperture open; and
**Figure 9** shows the manufacturing process of the vessel.

### Example

Referring to the Figures, there is shown an embodiment of a collapsible vessel or container 2, for use in holding or retaining a fluid. The vessel 2 can, in one embodiment, be a cup or mug (and therefore have a handle - not shown), and therefore be used to hold a drink, for example a cold beverage. However, the materials used to manufacture the vessel 2 make it especially suitable for holding hot drinks, or hot soup or broth or the like, without the risk of injuring the user who is holding it. In another embodiment, the vessel 2 may be arranged to hold other fluids or liquids, for example the vessel 2 could be a bucket, or a washing up bowl etc. Indeed, the vessel 2 can carry any fluid, and be of any shape (e.g. square or rectangular) or size, as long as it is collapsible, and is useful when it needs to be transported.

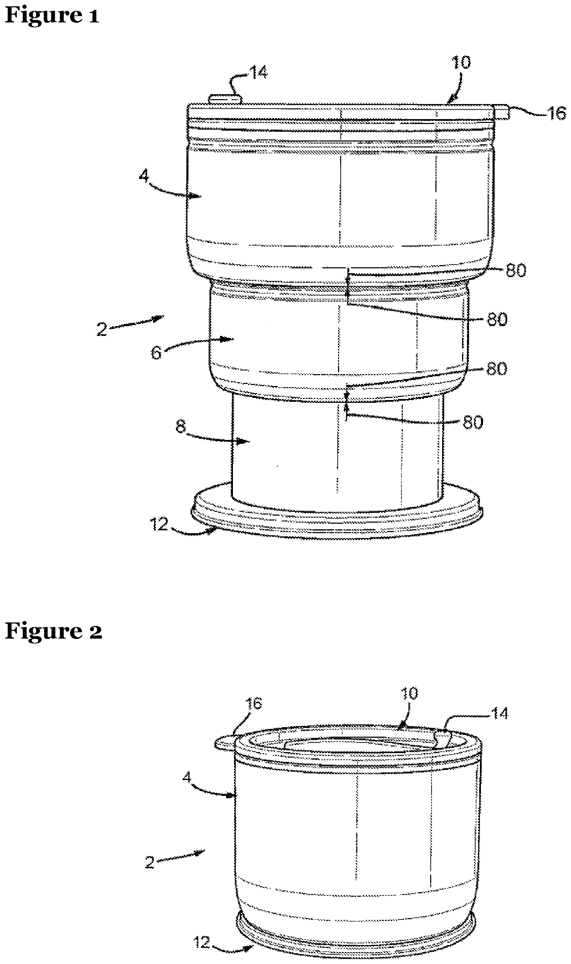

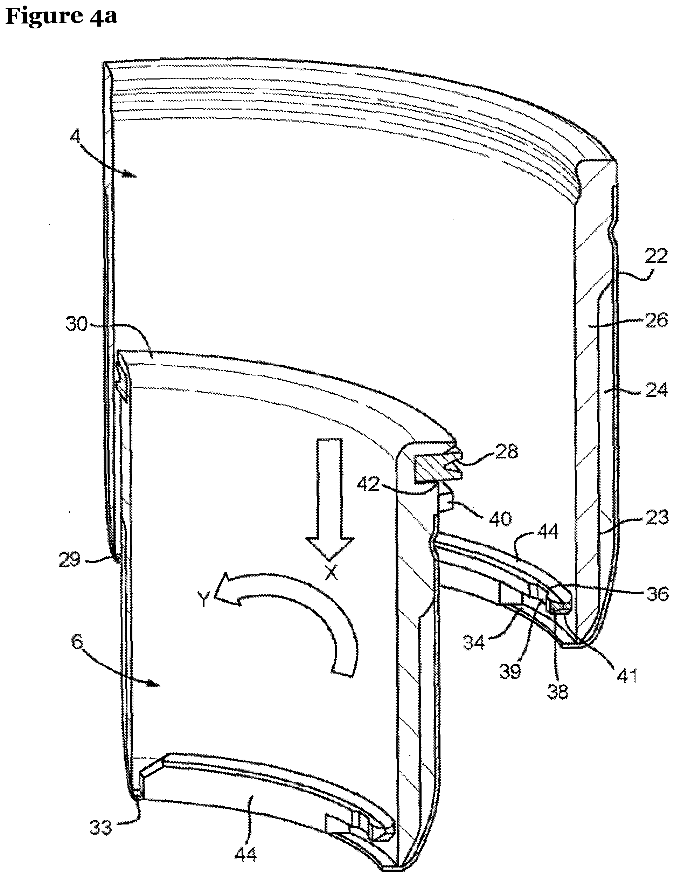

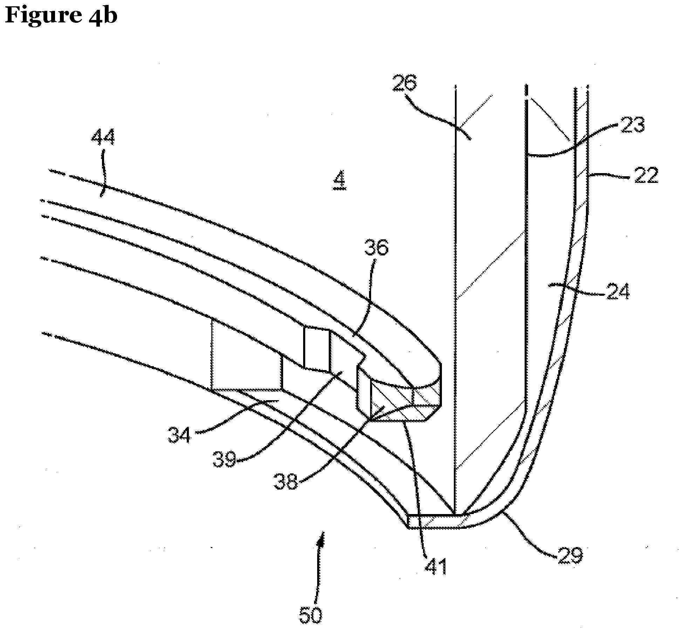

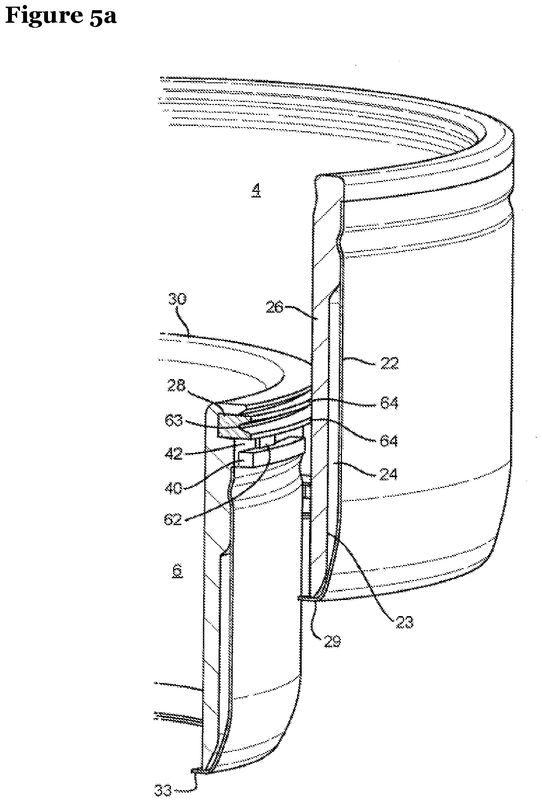

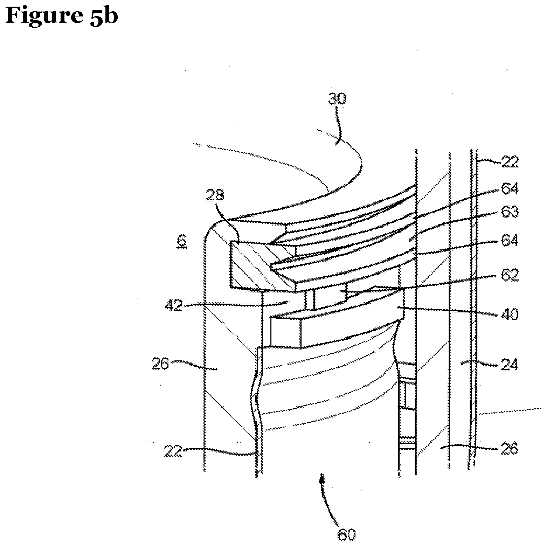

Referring to Figures 1, 3 and 6, the vessel 2 is shown in an extended configuration, and it is in this configuration that fluid (e.g. a liquid drink or soup etc.) can be contained. As shown and described in relation to Figures 4 and 5, the vessel includes a number of elegant locking systems 50, 60, which, as is described in detail below, releasably secure the vessel 2 in the extended configuration, and prevents unwanted collapse. Figures 2, 7 and 8, on the other hand, show the vessel 2 in a collapsed configuration, and it is in this configuration that the vessel 2 takes up less space and so is easily transportable, because it is simpler to carry in a user's pocket, bag or the like. However, it will be appreciated that a smaller volume of fluid could still be contained in the vessel 2 when it is in the collapsed configuration, as shown in Figure 2.

As shown in Figures 1, 3 and 6, the vessel 2 has a circular cross-section, having three moveable coaxial cylindrical sections or tubes, 4, 6 and 8, which nest together to define an inner cavity for retaining liquid therein. The sections are circular in cross-section, but of varying diameters such that section 4 has a greater diameter than section 6, which in turn has a greater diameter than section 8. As such, section 8 is able to fit inside section 6, which can fit inside section 8, and thereby collapse down into the collapsed configuration shown in Figures 2, 7 and 8.

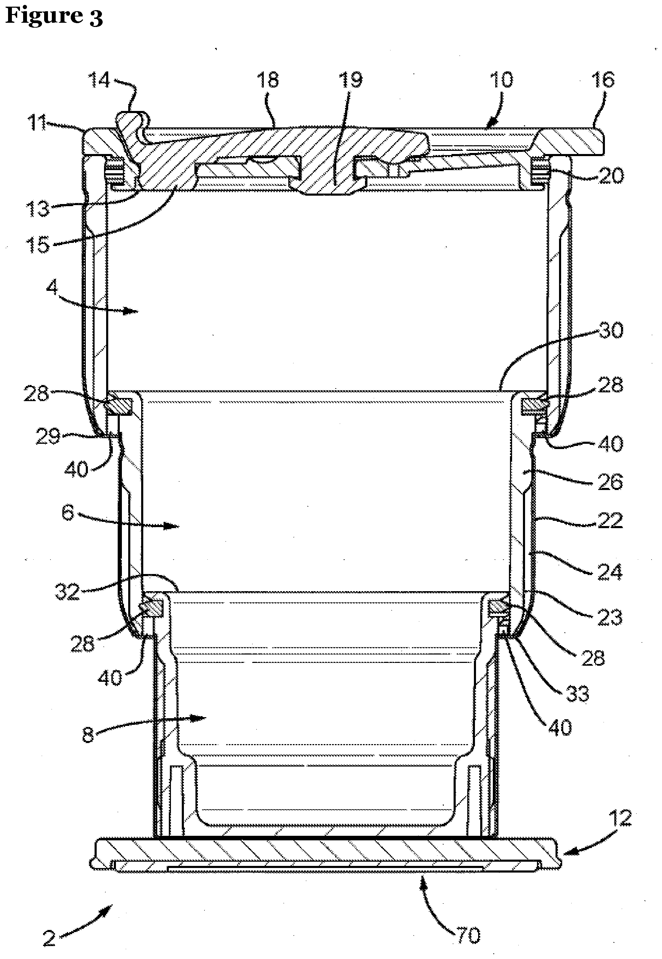

Figure 3 shows that sections 4, 6 and 8 of the vessel 2 each comprise a double walled structure, having an outer stainless steel shell 22 attached to an inner plastic shell 26 by spacer struts 23, and defining an air gap 24 therebetween. This double-walled arrangement significantly improves not only the thermal insulation properties of the vessel 2 (as it is possible to produce a robust, leak-proof collapsible vessel from materials having different thermal expansion properties), but also its aesthetic appeal, and means that it is possible to embellish the outer wall 22 with attractive branding.

As can be seen clearly in Figure 1, the outer wall of top section 4 tapers radially inwardly to meet the outer wall of the middle section 6, which in turn tapers radially inwardly to meet the outer wall of the bottom section 8. The outer diameter of section 4 is 90mm, the inner diameter is 82mm, and its length is 52mm. The outer diameter of section 6 is 80mm, the inner diameter is 68mm, and its length is 45mm. The outer diameter of section 8 is 67mm, the inner diameter is 63mm, and its length is 45mm.

The total length (i.e. height) of the vessel 2 when in the extended configuration shown in Figure 1 is approximately 136.5mm.

One end of the smallest section 8 is open, whereas the opposite end is closed and has a base 12 attached thereto. The diameter of the base 12 is greater than the diameter of section 8 (and also section 6) in order to improve the stability of the vessel 2 when it is placed down a support surface, such as a table or desk. The underside of the base 12 has a silicone base grip 70 to further improve stability. Both ends of the cylindrical section 6 and also section 4 are open, with section 8 being able to slide into, and partially through, section 6, and second 6 being able to slide into, and partially through, section 4.

Vessel 2 has a removable lid 10 which can be releasably attached to the open end of section 4, which is distal to the base 12, as shown in Figure 1 and 2. This allows for liquids to be poured into the vessel 2 and then subsequently closed with the lid 10, stopping any liquid that is retained within the vessel 2 from being spilled. The outer diameter of the lid 10 is generally the same as that of section 4, except for a small lip 16 on one side that overhangs section 4 when the lid 10 is engaged therewith, to enable easy removal of the lid 10. The lid 10 has an inner section 20 which has a smaller diameter than section 4 and which is fitted with a silicone moulding, such that when the lid 10 is engaged with section 4, a tight seal is created that is impermeable to liquids. Instead of using a friction fit as shown in the illustrated embodiment, in an alternative example, the lid 10 and upper inner surface of section 4 is provided with a screw thread, such that the lid 10 can be screwed tightly onto section 4.

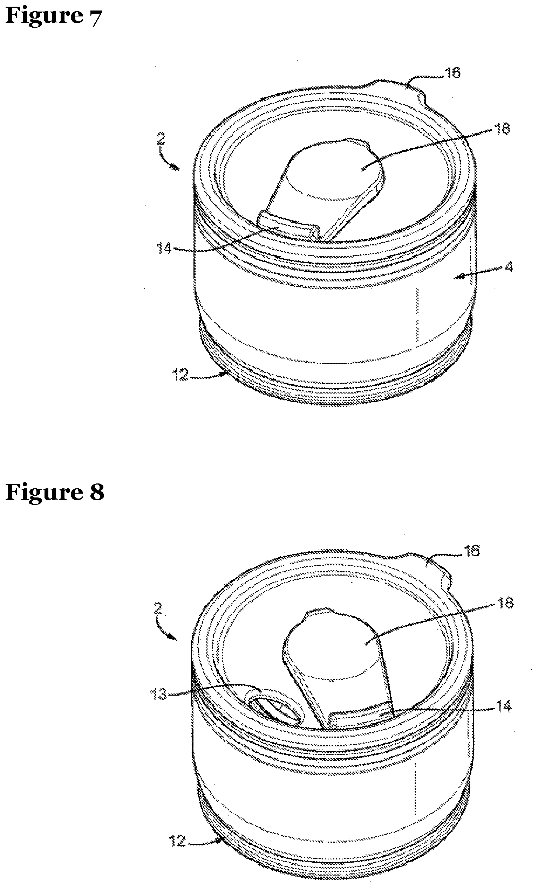

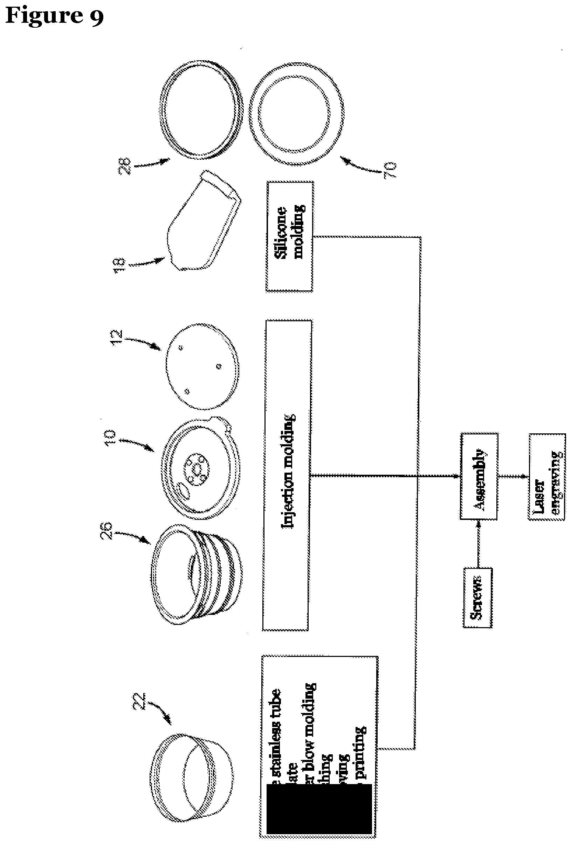

The lid 10 comprises a flexible silicone stopper 18 that is flexibly mounted about a pivot 19 and which includes a plug 15 which is capable of sealing a small aperture 13 present in the lid 10. An upper portion of the stopper 18 comprises a flange 14 to enable a user to lift and move the stopper 18 from a first position in which the plug 15 is inserted in the aperture 13 to ensure liquid is retained in the vessel 2 (as shown in Figure 7), and a second position in which the aperture is revealed to permit the user to drink from the vessel 2 (as shown in Figures 8 and 9).

As shown in Figure 3, a first silicone O-ring 28 extends circumferentially around the top 30 of section 6, and a second silicone O-ring 28 extends circumferentially around the top 32 of section 8. Sections 4 and 6, and sections 6 and 8 are each separated by one of the silicone rings 28. Figure 5b shows the silicone ring on section 6 most clearly. It can be seen that inner surface of the ring 28 is tightly fitted into a correspondingly shaped slot which has been cut out of section 6, leaving an exposed surface which is provided with a circumferentially extending slot 63 flanked either side by a circumferentially extending ridge 64. The two silicone rings 28 enable ease of opening and closing the vessel 2 between the extended and collapsed configurations, and also prevent fluid leakages. In particular, the two ridges 64 provide a robust double seal between adjacent sections. When the vessel 2 is extended, top 30 of section 6 is disposed above base 29 of section 4, and top 32 of section 8 is disposed above base 33 of section 6. Figures 2, 7 and 8 show the same embodiment of the collapsible vessel 2 in the collapsed configuration. In the collapsed configuration, only section 4 is visible, because the smaller and medium diameter sections 6 and 8 are wholly contained within larger section 4.

Referring to Figures 4a & 4b and 5a & 5b, there are shown components of a locking system 50, 60 which is provided on the vessel 2 to secure the various sections 4, 6, 8 together when in the extended configuration to prevent unwanted vessel 2 collapse and leaks, but which is also designed to easily disengage, and allow the sections 4, 6, 8 to slide with respect to each other when moving between the extended and collapsed configurations. Each locking system comprises a "female" component 50, and a "male" component 60, which are disposed on corresponding locations on opposing sides of sections 4 and 6, and also on opposing sides of sections 6 and 8, and which mutually engage to lock and unlock these sections. Figure 4b shows an enlarged view of the first ("female") component 50 of the locking system shown in Figure 4a, and Figure 5b shows an enlarged view of the second ("male") component 60 shown in Figure 5a.

As can be seen in Figures 4a and 4b, the first ("female") component of the locking system 50 comprises an elongate rigid plastic moulding 44, which is attached to, and extends partially around the circumference of the lowermost portion of the inner facing surface of the cylindrical section 4. The moulding 44 therefore extends along a short arc along the inner circumference of section 4. Section 6 also includes a similar moulding 44 which extends along a short arc along the inner circumference of section 6.

Although the figures only show one locking system 50, 60, and therefore only one moulding 44, it should be appreciated that there are in fact four mutually engaging locking systems 50,60 on sections 4 and 6, and another four mutually engaging locking systems 50,60 on sections 6 and 8. Accordingly, there are four spaced apart mouldings 44 disposed at 90° with respect to each other along the circumference of each of sections 4 and 6. Each elongate moulding 44 is approximately 5mm thick, and about 35mm long. At one end, each moulding 44 splits into (approximately) upper half to create an elongate overhanging finger 36, which tapers radially inwardly to form a small recess 39, and which then tapers radially outwardly to create a terminal lug 38. Disposed circumferentially adjacent to the lug 38 and between adjacent mouldings 44 on the same section, there is provided a space 41 through which the corresponding male component 60 may pass, as described below, as the vessel 2 is moved between the collapsed and extended configurations. An elongate slot 34 extends partially around the circumference of the lowermost portion of the inner facing surface of the cylindrical section 4, and is adjacent to, and parallel with, the overhanging finger 36. The overhanging finger 36 is disposed further away from the top of section 6 than the slot 34.

Referring now to Figures 5a and 5b, the second ("male") component of the locking system 60 includes a plastic or silicone moulding 40, which is attached to, and extends partially around the circumference of the uppermost portion of the outer facing surface of the cylindrical section 6. Section 8 also includes a similar moulding 40 attached thereto its outer surface. As mentioned above, there are four mutually engaging locking systems 50, 60 on sections 4 and 6, and another four mutually engaging locking systems 50, 60 on sections 6 and 8, and so there are four spaced apart "male" mouldings 40 disposed at 90° with respect to each other along the circumference of each of sections 6 and 8.

The circumferentially extending silicone ring 28 is disposed spaced apart and above the mouldings 40, thereby creating a space 42 therebetween. Adjacent to the space 42, and circumferentially therealong, there is provided a protrusion 62, over which the lug 38 of the first component of the locking system 50 can pass until it reaches, and is received by, the space 42. When the lug 38 is received by the space 42, the moulding 40 is received by slot 34 under finger 36. Insodoing, the female component 50 and male component 60 of the locking system mutually engage with each other, thereby locking the sections 4, 6, 8 together. The components 50, 60 may be disengaged by moving the lug 38 out of the slot 42 and back over the protrusion 62. The following section will now describe how a user extends the vessel 2 from the collapsed configuration (shown in Figure 2) to the extended configuration (shown in Figure 3), and back again to the collapsed configuration.

When the vessel 2 is in the collapsed configuration, the user first removes the stopper 18 on lid 10 to allow air to flow through aperture 13 during the extension process. If the stopper 18 is not taken off aperture 13, a partial vacuum may be created making it harder to pull the vessel 2 apart. Then, the user applies a rotational force to the base 12 and the upper cylindrical section 4, such that the first and second components of the locking system 50, 60, respectively, are mutually arranged such that they do not engage with each other. This is achieved by twisting (in the opposite direction to arrow Y shown in Figure 4a) the base 12 and section 4 to arrange the mouldings 40 of the male components 60 such that it is not in axial alignment with the finger 36 of the female component 50. Instead, the mouldings 40 are axially aligned with the spaces 41 between each moulding 44, as shown in Figure 4b. Accordingly, when viewed from above (and along the elongate axis of the vessel 2) the position of the arc created by the finger 36 does not correspond to the position of the arc created by the moulding 40.

The user then grips the base 12 and the upper cylindrical section 4, and applies an axial force (in the opposite direction to arrow X), thereby pulling them apart. The spaced apart axial alignment of the finger 36 and the mounting 40, as described above, means that they do not abut and interfere with each other under application of the axial force, thereby allowing sections 4, 6 and 8 to be axially separated. The sections 4, 6 slide apart to separate until the underside of silicone ring 28 on section 6 abuts the top of moulding 44 on section 4. Similarly, sections 6 and 8 slide apart to separate until the underside of silicone ring 28 on section 8 abuts the top of moulding 44 on section 6. The vessel is now in the full extended configuration, but still unlocked, and so the locking system 50, 60 must be engaged to prevent collapse.

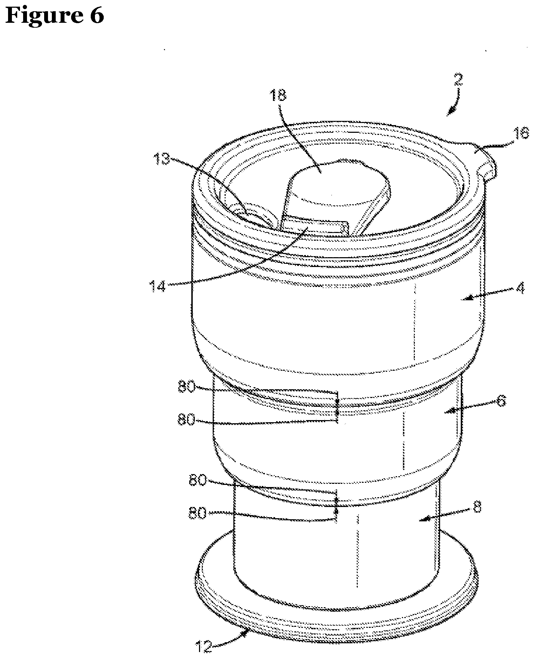

Once the sections 4, 6 and 8 have been axially separated, the user now applies opposing rotational forces on sections 4 and 6, in the direction of arrow Y in Figure 4a, thereby urging the finger 36 of female locking component 50 into space 42 such that the terminal lug 38 is urged over protrusion 62 of the male component 60 until the protrusion 62 is received by, and engages with, recess 39 of the female locking component 50. As shown in Figures 1 and 6, the sides of each section 4, 6, 8 includes a guide mark 80 (for example a short straight line, or an arrow, or a dot etc.), which align with each other to signify when the female and male components 50, 60 are engaged with each other. The circumferentially extending silicone ring 28 acts to control rotation and, once the female and male locking components 50, 60 are engaged with one another, the ring 28 forms a tight seal between adjacent sections by contacting the moulding 44 and lug 38.

Once the vessel 2 has been extended, the user can remove the lid 10 by applying an upwards force from section 4 to lip 16, and fill the vessel 2 with the desired liquid. The user can then replace the lid 10 to seal the liquid within the vessel 2. To access the liquid for drinking, the user applies an upward force to flange 14 on the stopper 18 to reveal the small aperture 13 and rotate the stopper 18 about the rotatable pivot 19 to enable the user to access the liquid through the aperture 13.

Once the user has finished drinking, and wishes to collapse the vessel 2, they rotate each section 4, 6, 8 in the opposite direction than when locking, such that moulding 40 is rotated out of slot 34, and is aligned with recess 41, and the lug portion 38 is disengaged from the space 42. Accordingly, the female and male components of the locking system 50, 60 are disengaged from one another. The guide marks 80 help the user to know when the female and male components 50, 60 are disengaged from each other. A force is then applied in the direction of the top of section 4 (arrow X in Figure 4a) towards the base 12 to collapse the vessel 2.

Referring to Figure 9, there is shown the process used to manufacture the vessel 2 of the invention. Sections 4, 6, 8 each consist of a stainless steel tube 22 made from plate metal, which are then water blow moulded into shape, and polished. Appropriate grooves are provided and then any branding/logos are printed thereon. The inner plastic shells 26, lid 10 and base 12 are injection moulded, and the stopper 18, rings 28 and base grip 70 are silicone moulded.

Advantages of the vessel 2 reside in it provides an elegant solution to transporting a fluid container in a collapsed configuration, which can be very simply extended out into an expanded configuration for containing fluid. The double-walled "on the go" collapsible vessel 2 is a quality insulated drinking vessel which expands and locks in place for drinking, and then collapsed down for easy transportation. The embodiment shown has three sections 4, 6, 8, which collapse into each other, but the design could have two or more collapsing sections. In other examples, the inventors envisage the vessel 2 having four of five collapsing sections. The volume of the vessel 2 when containing fluid is variable because the vessel 2 could be fully extended, or only partially extended. In addition, the vessel 2 could even carry a smaller volume of fluid when in the collapsed configuration. The silicone seals 28 ensure that no fluid leaks when in any configuration, thereby improving the safety of the vessel 2, especially if the fluid is a hot beverage or foodstuff, the thermal effect of which can cause small expansions/contractions on the vessel 2.

The locking mechanism 50, 60 means that the vessel 2 is held securely in an expanded configuration, and the mechanism allows the sections to be expanded and locked using a quick pull and twist motion. The guide marks 80 on the side of each section of the vessel 2 are provided to show when the locking mechanism has been secured. The inventors have managed to create a vessel 4 which is made of an outer stainless steel shell 22 which has been press-fitted to a plastic inner shell 26 with the section separated by silicone rings 28 to allow easing opening and closing.

## Claims

1. A collapsible vessel (2) for containing fluid, the vessel comprising at least two interconnected tubular sections (4, 6, 8) which are configured to move axially with respect to each other upon application of a substantially axial force thereto, such that the vessel (2) is manipulatable between a collapsed configuration in which the sections (4, 6, 8) are substantially nested to form a tube having a first length and an extended configuration in which the sections (4, 6, 8) form a continuous tube having a second length which is greater than the first length, wherein each section (4, 6, 8) comprises an inner wall and an outer wall, and wherein at least one section comprises a circumferential ring (28) which provides a seal between the inner wall of one section and the outer wall of an adjacent section, as the vessel (2) is manipulated between the extended and collapsed configurations,
wherein the vessel comprises locking means (50, 60) configured to be reversibly locked while the vessel (2) is in the extended configuration upon the application of a rotational force to at least one section (4, 6, 8),
wherein the locking means (50, 60) comprises one or more first locking members (62) disposed on a first section, and one or more second locking members (39) disposed on a corresponding location on an adjacent section, wherein the or each first locking member (62) is configured to engage with the or each second locking members (39), to thereby lock the sections in the extended configuration, upon application of opposing rotational forces to each section (4, 6, 8),
wherein the or each first locking member (62) comprises a first moulding (40), which is attached to, and extends partially around the circumference of the lowermost portion of an inner facing surface of the section to which it is attached, and
wherein the or each second locking member (39) comprises a second moulding (44), which is attached to, and extends partially around the circumference of the uppermost portion of the outer facing surface of the section to which it is attached.

2. A vessel according to claim 1, wherein the vessel is a cup or mug.

3. A vessel according to either claim 1 or claim 2, wherein the inner wall is substantially non-metallic, and the outer wall is substantially metallic, optionally wherein the inner wall comprises or is plastic, and the outer wall comprises or is stainless steel.

4. A vessel according to any one of claims 1-3, wherein:
(i) the inner and outer walls are spaced apart with gas trapped in between the inner and outer wall of a section;
(ii) the sections of the vessel are substantially coaxial;
(iii) the vessel comprises at least two, at least three, at least four or at least five interconnected tubular sections;
(iv) the sections have different average or mean cross-sectional lengths such, upon application of a substantially axial force thereto, a first section can fit into the second section when the vessel is in the collapsed or partially collapsed configuration; and/or
(v) the cross-section of the sections is oblong, rectangular, square, triangular or circular.

5. A vessel according to any preceding claim, wherein either: (i) the vessel comprises two tubular sections, and at least one circumferential ring disposed between the two sections to create a seal therebetween, as one section fits inside the other; or (ii) the vessel comprises three tubular sections, and at least two circumferential rings, wherein each ring is disposed between a pair of adjacent sections to create seals therebetween, as one section fits inside the other.

6. A vessel according to any preceding claim, wherein:
(i) the or each circumferential ring is disposed between an inner wall of one tubular section and an outer wall of an adjacent tubular section;
(ii) the or each circumferential ring is disposed in or on an outer wall of a first tubular section and/or in or an inner wall of a second tubular section, or vice versa, wherein the first section is configured to fit inside the second section when the vessel is in the collapsed or partially collapsed configuration, preferably upon application of a substantially axial force thereto;
(iii) the or each circumferential ring is disposed on or in an outer wall of each section configured to fit inside an adjacent section; and/or
(iv) an inner surface of the circumferential ring is disposed in a correspondingly shaped slot disposed in an outer wall of the section, thereby leaving an exposed surface of the ring which is configured to abut the inner wall of the adjacent section, optionally
wherein the exposed surface of the ring comprises a circumferentially extending groove, preferably flanked on one or both sides by a circumferentially extending ridge.

7. A vessel according to any preceding claim, wherein:
(i) the circumferential ring comprises or consists of a resilient material, for example silicone or rubber;
(ii) the vessel comprises a removable lid which can be releasably attached to the open end of the section having the larger average or mean cross-sectional length; and/or
(iii) the vessel comprises guide means configured to indicate when the locking means is either engaged or disengaged, optionally wherein the guide means is disposed on one or more of the sections, such that when the guide means on adjacent sections are aligned, they indicate that the locking means is engaged.

8. A vessel according to any preceding claim, wherein the or each first and second locking members are configured to be disengaged from each other to unlock the sections upon application of a substantially rotational force in an opposite direction to that applied for locking to at least one section, more preferably upon application of opposing rotational forces to each section, most preferably in opposite directions to those applied for locking.

9. A vessel according to any preceding claim, wherein the locking means comprises a plurality of first locking members, wherein each one is circumferentially spaced apart along the circumference of the section, optionally
wherein the locking means comprises at least two, at least three, or at least four spaced apart first locking members, and a corresponding number of second locking members, optionally
wherein the locking means comprises four spaced apart first locking members disposed at about 90° with respect to each other along the circumference of the section to which they are attached.

10. A vessel according to any preceding claim, wherein the or each first moulding comprises a body section from which extends an elongate overhanging finger, optionally
wherein the overhanging finger tapers radially inwardly to form a small recess, and tapers radially outwardly to create a terminal lug, optionally
wherein an elongate slot extends partially around the circumference of the lowermost portion of the inner facing surface of the section to which the first moulding is attached, and is adjacent to, and substantially parallel with, the overhanging finger.

11. A vessel according to any preceding claim, wherein the locking means comprises a plurality of second locking members, wherein each one is spaced apart along the circumference of the section to which they are attached.

12. A vessel according to claim 11, wherein the locking means comprises at least two, at least three, or at least four spaced apart second locking members, optionally wherein the locking means comprises four spaced apart second mouldings disposed at about 90° with respect to each other along the circumference of the section.

13. A vessel according to either claim 11 or 12, wherein the circumferential ring is disposed spaced apart and above the second moulding, thereby creating a space therebetween, optionally wherein adj acent to the space, and circumferentially therealong, the or each second locking member comprises a protrusion, over which the lug of the or each first locking member can pass until it reaches, and is received by, the space, optionally
wherein when the lug is received by the space, the second moulding is received by the slot under the overhanging finger, and the or each first locking member and the or each second locking member mutually engage with each other, thereby locking the sections together.

14. Use of the vessel according to any preceding claim to contain fluid.

15. A method of containing fluid, the method comprising inserting fluid into the vessel according to any one of claims 1-13.

## Patentansprüche

1. Zusammenschiebbares Gefäß (2) zum Aufnehmen eines Fluids, das Gefäß umfassend mindestens zwei miteinander verbundene rohrförmige Abschnitte (4, 6, 8), die konfiguriert sind, um sich bei Anwendung einer im Wesentlichen axialen Kraft darauf axial zueinander zu bewegen, sodass das Gefäß (2) zwischen einer zusammengeschobenen Konfiguration, in der die Abschnitte (4, 6, 8) im Wesentlichen ineinander geschachtelt sind, um ein Rohr zu bilden, das eine erste Länge aufweist, und einer auseinandergezogenen Konfiguration, in der die Abschnitte (4, 6, 8) ein durchgehendes Rohr mit einer zweiten Länge bilden, die größer ist als die erste Länge, wobei jeder Abschnitt (4, 6, 8) eine Innenwand und eine Außenwand umfasst und wobei mindestens ein Abschnitt einen Umfangsring (28) umfasst, der eine Dichtung zwischen der Innenwand eines Abschnitts und der Außenwand eines benachbarten Abschnitts bereitstellt, wenn das Gefäß (2) zwischen der auseinandergezogenen und der zusammengeschobenen Konfiguration manipuliert wird,
wobei das Gefäß Verriegelungseinrichtungen (50, 60) umfasst, die konfiguriert sind, um bei Anwendung einer drehenden Kraft auf mindestens einen Abschnitt (4, 6, 8) reversibel verriegelt zu werden, während das Gefäß (2) in der auseinandergezogenen Konfiguration ist,
wobei die Verriegelungseinrichtungen (50, 60) ein oder mehrere erste Verriegelungselemente (62), die an einem ersten Abschnitt angeordnet sind, und ein oder mehrere zweite Verriegelungselemente (39), die an einer entsprechenden Stelle an einem benachbarten Abschnitt angeordnet sind, umfasst, wobei das oder jedes erste Verriegelungselement (62) konfiguriert ist, um mit dem oder jedem zweiten Verriegelungselement (39) einzurasten, um bei Anwendung von entgegengesetzten Drehkräften auf jeden Abschnitt (4, 6, 8) dadurch die Abschnitte in der auseinandergezogenen Konfiguration zu verriegeln,
wobei das oder jedes erste Verriegelungselement (62) ein erstes Formteil (40) umfasst, das an dem untersten Abschnitt einer nach innen weisenden Fläche des Abschnitts, an dem es angebracht ist, angebracht ist und sich teilweise um dessen Umfang erstreckt, und
wobei das oder jedes zweite Verriegelungselement (39) ein zweites Formteil (44) umfasst, das an dem obersten Abschnitt der nach außen weisenden Fläche des Abschnitts, an dem es angebracht ist, angebracht ist und sich teilweise um dessen Umfang erstreckt.

2. Gefäß nach Anspruch 1, wobei das Gefäß eine Tasse oder ein Becher ist.

3. Gefäß nach entweder Anspruch 1 oder Anspruch 2, wobei die Innenwand im Wesentlichen nichtmetallisch ist und die Außenwand im Wesentlichen metallisch ist, optional wobei die Innenwand Kunststoff umfasst oder daraus ist und die Außenwand Edelstahl umfasst oder daraus ist.

4. Gefäß nach einem der Ansprüche 1-3, wobei:
(i) die Innen- und die Außenwand voneinander beabstandet sind, wobei Gas zwischen der Innen- und Außenwand eines Abschnitts eingeschlossen ist;
(ii) die Abschnitte des Gefäßes im Wesentlichen koaxial sind;
(iii) das Gefäß mindestens zwei, mindestens drei, mindestens vier oder mindestens fünf miteinander verbundene rohrförmige Abschnitte umfasst;
(iv) die Abschnitte unterschiedliche durchschnittliche oder mittlere Querschnittslängen aufweisen, sodass bei Anwendung einer im Wesentlichen axialen Kraft darauf ein erster Abschnitt in den zweiten Abschnitt passen kann, wenn das Gefäß in der zusammengeschobenen oder teilweise zusammengeschobenen Konfiguration ist; und/oder
(v) der Querschnitt der Abschnitte länglich, rechteckig, quadratisch, dreieckig oder kreisförmig ist.

5. Gefäß nach einem der vorherigen Ansprüche, wobei entweder: (i) das Gefäß zwei rohrförmige Abschnitte und mindestens einen Umfangsring umfasst, der zwischen den zwei Abschnitten angeordnet ist, um eine Dichtung dazwischen zu schaffen, wenn ein Abschnitt in den anderen passt; oder (ii) das Gefäß drei rohrförmige Abschnitte und mindestens zwei Umfangsringe umfasst, wobei jeder Ring zwischen einem Paar benachbarter Abschnitte angeordnet ist, um Dichtungen dazwischen zu schaffen, wenn ein Abschnitt in den anderen passt.

6. Gefäß nach einem der vorherigen Ansprüche, wobei:
(i) der oder jeder Umfangsring zwischen einer Innenwand eines rohrförmigen Abschnitts und einer Außenwand eines benachbarten rohrförmigen Abschnitts angeordnet ist;
(ii) der oder jeder Umfangsring in oder an einer Außenwand eines ersten rohrförmigen Abschnitts und/oder in oder an einer Innenwand eines zweiten rohrförmigen Abschnitts oder umgekehrt angeordnet ist, wobei der erste Abschnitt konfiguriert ist, um in den zweiten Abschnitt zu passen, wenn das Gefäß in der zusammengeschobenen oder teilweise zusammengeschobenen Konfiguration ist, vorzugsweise bei Anwendung einer im Wesentlichen axialen Kraft darauf;
(iii) der oder jeder Umfangsring an oder in einer Außenwand von jedem Abschnitt angeordnet ist, die konfiguriert ist, um in einen benachbarten Abschnitt zu passen; und/oder
(iv) eine Innenfläche des Umfangsrings in einem entsprechend geformten Schlitz angeordnet ist, der in einer Außenwand des Abschnitts angeordnet ist, wodurch eine freiliegende Fläche des Rings verbleibt, die konfiguriert ist, um an der Innenwand des benachbarten Abschnitts anzuliegen, optional
wobei die freiliegende Fläche des Rings eine sich in Umfangsrichtung erstreckende Nut aufweist, die vorzugsweise auf einer oder beiden Seiten von einem sich in Umfangsrichtung erstreckenden Steg flankiert wird.

7. Gefäß nach einem der vorherigen Ansprüche, wobei:
(i) der Umfangsring ein elastisches Material, zum Beispiel Silikon oder Gummi umfasst oder daraus besteht;
(ii) das Gefäß einen abnehmbaren Deckel umfasst, der lösbar an dem offenen Ende des Abschnitts mit der größeren durchschnittlichen oder mittleren Querschnittslänge befestigt werden kann; und/oder
(iii) das Gefäß Führungseinrichtungen umfasst, die konfiguriert sind, um anzugeben, wenn die Verriegelungseinrichtungen entweder eingerastet oder ausgerastet sind, wobei die Führungseinrichtungen optional an einem oder mehreren der Abschnitte angeordnet sind, sodass sie, wenn die Führungseinrichtungen an benachbarten Abschnitten ausgerichtet sind, angeben, dass die Verriegelungseinrichtungen eingerastet sind.

8. Gefäß nach einem der vorherigen Ansprüche, wobei das oder jedes erste und zweite Verriegelungselement konfiguriert ist, um voneinander ausgerastet zu werden, um die Abschnitte bei Anwendung einer im Wesentlichen drehenden Kraft in eine Richtung, die jener entgegengesetzt ist, die zum Verriegeln auf mindestens einen Abschnitt angewendet wird, vorzugsweise wenn entgegengesetzte Drehkräfte auf jeden Abschnitt aufgebracht werden, am meisten bevorzugt in entgegengesetzten Richtungen zu jenen, die zum Verriegeln aufgebracht werden, zu entriegeln.

9. Gefäß nach einem der vorherigen Ansprüche, wobei die Verriegelungseinrichtungen eine Vielzahl von ersten Verriegelungselementen umfassen, wobei jedes entlang des Umfangs des Abschnitts in Umfangsrichtung beabstandet ist, optional
wobei die Verriegelungseinrichtungen mindestens zwei, mindestens drei oder mindestens vier voneinander beabstandete erste Verriegelungselemente und eine entsprechende Anzahl von zweiten Verriegelungselementen umfassen, optional
wobei die Verriegelungseinrichtungen vier voneinander beabstandete erste Verriegelungselemente umfassen, die entlang des Umfangs des Abschnitts, an dem sie angebracht sind, in einem Winkel von etwa 90° zueinander angeordnet sind.

10. Gefäß nach einem der vorherigen Ansprüche, wobei das oder jedes erste Formteil einen Körperabschnitt umfasst, von dem sich ein länglicher, überhängender Finger erstreckt, optional
wobei der überhängende Finger sich radial nach innen verjüngt, um eine kleine Aussparung zu bilden, und sich radial nach außen verjüngt, um eine Endlasche zu bilden, optional
wobei sich ein länglicher Schlitz teilweise um den Umfang des untersten Abschnitts der nach innen weisenden Fläche des Abschnitts erstreckt, an dem das erste Formteil angebracht ist, und an den überhängenden Finger angrenzt und im Wesentlichen parallel zu diesem ist.

11. Gefäß nach einem der vorherigen Ansprüche, wobei die Verriegelungseinrichtungen eine Vielzahl von zweiten Verriegelungselementen umfassen, wobei jedes entlang des Umfangs des Abschnitts, an dem sie angebracht sind, voneinander beabstandet ist.

12. Gefäß nach Anspruch 11, wobei die Verriegelungseinrichtungen mindestens zwei, mindestens drei oder mindestens vier voneinander beabstandete zweite Verriegelungselemente umfassen, optional
wobei die Verriegelungseinrichtungen vier voneinander beabstandete zweite Formteile umfassen, die in einem Winkel von etwa 90° zueinander entlang des Umfangs des Abschnitts angeordnet sind.

13. Gefäß nach entweder Anspruch 11 oder 12, wobei der Umfangsring beabstandet und oberhalb des zweiten Formteils angeordnet ist, wodurch ein Zwischenraum dazwischen entsteht, wobei das oder jedes zweite Verriegelungselement optional angrenzend an den Zwischenraum und in Umfangsrichtung davon einen Vorsprung aufweist, über den die Lasche des oder jedes ersten Verriegelungselements verlaufen kann, bis sie den Zwischenraum erreicht und von diesem aufgenommen wird, optional
wobei, wenn die Lasche von dem Zwischenraum aufgenommen wird, das zweite Formteil von dem Schlitz unter dem überhängenden Finger aufgenommen wird und das oder jedes erste Verriegelungselement und das oder jedes zweite Verriegelungselement gegenseitig ineinander einrasten, wodurch die Abschnitte miteinander verriegelt werden.

14. Verwendung des Gefäßes nach einem der vorherigen Ansprüche zum Aufnehmen von Fluid.

15. Verfahren zum Aufnehmen von Fluid, wobei das Verfahren ein Einbringen von Fluid in das Gefäß nach einem der Ansprüche 1-13 umfasst.

## Revendications

1. Récipient pliable (2) destiné à contenir un fluide, le récipient comprenant au moins deux sections tubulaires interconnectées (4, 6, 8) qui sont conçues pour se déplacer axialement l'une par rapport à l'autre lors de l'application d'une force sensiblement axiale à celles-ci, de sorte que le récipient (2) soit manipulable entre une configuration pliée dans laquelle les sections (4, 6, 8) sont sensiblement emboîtées pour former un tube possédant une première longueur et une configuration déployée dans laquelle les sections (4, 6, 8) forment un tube continu possédant une seconde longueur qui est supérieure à la première longueur, chaque section (4, 6, 8) comprenant une paroi interne et une paroi externe, et au moins une section comprenant une bague circonférentielle (28) qui forme un joint d'étanchéité entre le paroi interne d'une section et la paroi externe d'une section adjacente, tandis que le récipient (2) est manipulé entre les configurations déployée et pliée,
ledit récipient comprenant un moyen de verrouillage (50, 60) conçu pour être verrouillé de manière réversible pendant que le récipient (2) est dans la configuration déployée lors de l'application d'une force de rotation à au moins une section (4, 6, 8),
ledit moyen de verrouillage (50, 60) comprenant un ou plusieurs premiers éléments de verrouillage (62) disposés sur une première section, et un ou plusieurs seconds éléments de verrouillage (39) disposés sur un emplacement correspondant sur une section adjacente, ledit ou chaque premier élément de verrouillage (62) étant conçu pour se mettre en prise avec le ou chaque second élément de verrouillage (39), pour ainsi verrouiller les sections dans la configuration déployée, lors de l'application de forces de rotation opposées à chaque section (4, 6, 8),
ledit ou chaque premier élément de verrouillage (62) comprenant un premier élément moulé (40), qui est fixée à la partie la plus inférieure d'une surface orientée vers l'intérieur de la section à laquelle il est fixé et s'étend partiellement autour de la circonférence de celle-ci, et
ledit ou chaque second élément de verrouillage (39) comprenant un second élément moulé (44), qui est fixé à la partie la plus supérieure de la surface orientée vers l'extérieur de la section à laquelle il est fixé et s'étend partiellement autour de la circonférence de celle-ci.

2. Récipient selon la revendication 1, ledit récipient étant un gobelet ou une tasse.

3. Récipient selon l'une ou l'autre de la revendication 1 ou de la revendication 2, ladite paroi interne étant sensiblement non métallique et ladite paroi externe étant sensiblement métallique, éventuellement ladite paroi interne comprenant du plastique ou étant en plastique, et ladite paroi externe comprenant de l'acier inoxydable ou étant en acier inoxydable.

4. Récipient selon l'une quelconque des revendications 1 à 3,
(i) lesdites parois interne et externe étant espacées avec du gaz emprisonné entre la paroi interne et externe d'une section ;
(ii) lesdites sections du récipient étant sensiblement coaxiales ;
(iii) ledit récipient comprenant au moins deux, au moins trois, au moins quatre ou au moins cinq sections tubulaires interconnectées ;
(iv) lesdites sections possédant des longueurs transversales moyennes différentes de sorte que, lors de l'application d'une force sensiblement axiale sur ceux-ci, une première section puisse s'ajuster dans la seconde section lorsque le récipient est dans la configuration pliée ou partiellement pliée ; et/ou
(v) ladite section transversale des sections étant oblongue, rectangulaire, carrée, triangulaire ou circulaire.

5. Récipient selon une quelconque revendication précédente, (i) ledit récipient comprenant deux sections tubulaires, et au moins un bague circonférentielle disposée entre les deux sections pour créer un joint d'étanchéité entre elles, tandis qu'une section s'ajuste dans l'autre ; ou (ii) ledit récipient comprenant trois sections tubulaires et au moins deux bagues circonférentielles, chaque bague étant disposée entre une paire de sections adjacentes pour créer des joints d'étanchéité entre elles, tandis qu'une section s'ajuste dans l'autre.

6. Récipient selon une quelconque revendication précédente,
(i) ledit ou chaque bague circonférentielle étant disposée entre une paroi interne d'une section tubulaire et une paroi externe d'une section tubulaire adjacente ;
(ii) ladite ou chaque bague circonférentielle étant disposée dans ou sur une paroi externe d'une première section tubulaire et/ou dans ou une paroi interne d'une seconde section tubulaire, ou vice versa, ladite première section étant conçue pour s'ajuster dans la seconde section lorsque le récipient est dans la configuration pliée ou partiellement pliée, de préférence lors de l'application d'une force sensiblement axiale sur celle-ci ;
(iii) ladite ou chaque bague circonférentielle étant disposée sur ou dans une paroi externe de chaque section conçue pour s'ajuster dans une section adjacente ; et/ou
(iv) une surface interne de la bague circonférentielle étant disposée dans une fente de forme correspondante disposée dans une paroi externe de la section, laissant ainsi une surface exposée de la bague qui est conçue pour venir en butée contre la paroi interne de la section adjacente, éventuellement
ladite surface exposée de la bague comprenant une rainure s'étendant circonférentiellement, de préférence flanquée sur un ou les deux côtés par une nervure s'étendant circonférentiellement.

7. Récipient selon une quelconque revendication précédente,
(i) ladite bague circonférentielle comprenant un matériau élastique ou étant constituée de celui-ci, par exemple du silicone ou du caoutchouc ;
(ii) ledit récipient comprenant un couvercle amovible qui peut être fixé de manière amovible à l'extrémité ouverte de la section possédant la longueur transversale moyenne plus grande ; et/ou
(iii) ledit récipient comprenant un moyen de guidage conçu pour indiquer lorsque le moyen de verrouillage est en prise ou séparé, éventuellement ledit moyen de guidage étant disposé sur l'une ou plusieurs des sections, de sorte que lorsque le moyen de guidage sur des sections adjacentes est aligné, il indique que le moyen de verrouillage est en prise.

8. Récipient selon une quelconque revendication précédente, ledit ou chaque premier et second éléments de verrouillage étant conçus pour être séparés l'un de l'autre pour déverrouiller les sections lors de l'application d'une force sensiblement de rotation dans une direction opposée à celle appliquée pour le verrouillage sur au moins une section, mieux encore lors de l'application de forces de rotation opposées à chaque section, idéalement dans des directions opposées à celles appliquées pour le verrouillage.

9. Récipient selon une quelconque revendication précédente, ledit moyen de verrouillage comprenant une pluralité de premiers éléments de verrouillage, chacun étant circonférentiellement espacé le long de la circonférence de la section, éventuellement
ledit moyen de verrouillage comprenant au moins deux, au moins trois ou au moins quatre premiers éléments de verrouillage espacés, et un nombre correspondant de seconds éléments de verrouillage, éventuellement
ledit moyen de verrouillage comprenant quatre premiers éléments de verrouillage espacés disposés à environ 90° l'un par rapport à l'autre le long de la circonférence de la section à laquelle ils sont fixés.

10. Récipient selon une quelconque revendication précédente, ledit ou chaque premier élément moulé comprenant une section de corps à partir de laquelle s'étend un doigt allongé en porte-à-faux, éventuellement
ledit doigt en porte-à-faux se rétrécissant radialement vers l'intérieur pour former un petit évidement, et se rétrécissant radialement vers l'extérieur pour créer un ergot terminal, éventuellement
une fente allongée s'étendant partiellement autour de la circonférence de la partie la plus inférieure de la surface orientée vers l'intérieur de la section à laquelle le premier élément moulé est fixé, et étant adjacente et sensiblement parallèle au doigt en porte-à-faux.

11. Récipient selon une quelconque revendication précédente, ledit moyen de verrouillage comprenant une pluralité de seconds éléments de verrouillage, chacun étant espacé le long de la circonférence de la section à laquelle ils sont fixés.

12. Récipient selon la revendication 11, ledit moyen de verrouillage comprenant au moins deux, au moins trois ou au moins quatre seconds éléments de verrouillage espacés, éventuellement
ledit moyen de verrouillage comprenant quatre seconds éléments moulés espacés disposés à environ 90° l'un par rapport à l'autre le long de la circonférence de la section.

13. Récipient selon soit la revendication 11 soit 12, ladite bague circonférentielle étant disposée à distance et au-dessus du second élément moulé, créant ainsi un espace entre eux, éventuellement adjacent à l'espace, et circonférentiellement le long de celui-ci, ledit ou chaque second élément de verrouillage comprenant une saillie, sur laquelle peut passer l'ergot du ou de chaque premier élément de verrouillage jusqu'à ce qu'il atteigne et soit reçu par l'espace, éventuellement
lorsque l'ergot est reçue par l'espace, ledit second élément moulé étant reçu par la fente sous le doigt en porte-à-faux, et ledit ou chaque premier élément de verrouillage et ledit ou chaque second élément de verrouillage se mettant en prise mutuellement l'un avec l'autre, verrouillant ainsi les sections ensemble.

14. Utilisation du récipient selon une quelconque revendication précédente pour contenir un fluide.

15. Procédé pour contenir un fluide, le procédé comprenant l'insertion de fluide dans le récipient selon l'une quelconque des revendications 1 à 13.
